Europäisches Patentamt

European Patent Office

Office européen des brevets

(19)

(11) Veröffentlichungsnummer: **0 191 150 B1**

(12) **EUROPÄISCHE PATENTSCHRIFT**

(45) Veröffentlichungstag der Patentschrift:
**14.09.88**

(51) Int. Cl.⁴: **F 16 D 25/14, F 04 B 49/00**

(21) Anmeldenummer: **85114634.0**

(22) Anmeldetag: **18.11.85**

(54) Vorrichtung zum Ausrücken einer einen motorischen Antrieb mit einem Kompressor verbindenden Kupplung.

(30) Priorität: **14.12.84 DE 3445743**

(43) Veröffentlichungstag der Anmeldung:
**20.08.86 Patentblatt 86/34**

(45) Bekanntmachung des Hinweises auf die Patenterteilung:
**14.09.88 Patentblatt 88/37**

(84) Benannte Vertragsstaaten:
**AT BE DE FR GB IT NL SE**

(56) Entgegenhaltungen:
**CH - A - 345 208**
**FR - A - 1 408 810**
**GB - A - 679 669**
**US - A - 3 849 027**

(73) Patentinhaber: **KNORR-BREMSE AG, Moosacher Strasse 80 Postfach 401060, D-8000 München 40 (DE)**

(72) Erfinder: **Klemm, Johann, Arnauerstrasse 6, D-8000 München 45 (DE)**
Erfinder: **Spurny, Dieter, Am Schönblick 11, D-8069 Reichertshausen (DE)**
Erfinder: **Sternitzke, Eberhard, Bechtolsheimstrasse 17, D-8000 München 50 (DE)**

ACTORUM AG

## Beschreibung

Die Erfindung betrifft eine Vorrichtung nach dem Gattungsbegriff des Patentanspruches 1.

Bei einer hydraulisch-pneumatischen Kupplungsanordnung bekannter Art (GB-A-679 669) ist ein durch Druckluft beaufschlagbarer Ringkolben vorgesehen, welcher gegen Federkraft beaufschlagbar ist und auf einen Mechanismus zum Ausrücken einer in einem Antriebsstrang wirkenden Kupplung einwirkt. Der den Ringkolben führende Ringraum ist mit einem Kupplungssteuerventil verbunden, mittels welchem der Druckraum mit Druckluft gespeist oder zum Zwecke des Druckabbaues mit Atmosphäre verbunden wird. Infolge des totalen Druckabbaues im Ringraum kann nicht vollständig ausgeschlossen werden, dass der Ringkolben innerhalb des Ringraumes eine etwas verkantete Lage einnimmt, zumindest ist bei erneuter Druckbeaufschlagung zunächst ein Anliegehub des Ringkolbens erforderlich.

Bei insbesondere in Kraftfahrzeugen verwendeten Weiterbildungen derartiger Kupplungen, welche den motorischen Antrieb mit einem Luftkompressor zu verbinden vermögen, ist eine besonders gelichförmige Führung des Ringkolbens erwünscht, da sich bei Schieflage des Ringkolbens eine ungleichmässige Verteilung der Kolbenkraft auf die Federn der Kupplung ergeben kann. Die Folge davon ist ein unverhältnismässig hoher Verschleiss an den Federelementen, insbesondere dann, wenn die Kraft der Federn mit zunehmendem Verschleiss der Kupplungsbeläge abnimmt.

Davon ausgehend besteht die Aufgabe der Erfindung darin, eine Vorrichtung der gattungsgemässen Art so auszugestalten, dass der zum Zwecke des Ausrückens der Kupplung durch Druckluft beaufschlagbare Ringkolben auch im entlüfteten Zustand axialsymmetrisch geführt ist un sich infolgedessen gleichförmig an die Federelemente der Kupplung anlegt. Es soll hierdurch eine ungleichförmige Belastung der Federelemente und der Lamellen der Kupplung im eingerückten Zustand derselben vermieden werden. Gleichzeitig soll es möglich sein, den Ringraum baulich gedrängt auszuführen.

Zur Lösung dieser Aufgabe dienen die Merkmale nach dem Kennzeichnungsteil des Patentanspruches 1.

Durch den im Ringraum gehaltenen Restdruck, der zum Beispiel 0,5 bar betragen kann, ist bei eingerückter Kupplung sichergestellt, dass der Ringkolben dennoch gleichmässig an seinem gesamten Umfang belastet, also in Richtung der Federelemente der Kupplung verspannt wird. Der Restdruck wirkt also als Ersatz für die bei bekannten Einrichtungen im Ringraum unter Winkelabstand angeordneten Federn, welche infolge ihrer ungleichförmigen Krafteinwirkung zu einer Schräglage des Ringkolbens beitragen können. Durch die gleichförmige Andrückung des Ringkolbens gegenüber den Federelementen, so gegenüber den Tellerfedern der Kupplung, ist ausserdem sichergestellt, dass der Verschleiss an den Bestandteilen der Kupplung, insbesondere an den Tellerfedern und an den Lamellen, möglichst gering und insbesondere gleichförmig ist. Die Höhe des Restdruckes wird durch die Feder des Entlüftungsventils bestimmt; dies vermittelt bei einstellbarer Rückstellfeder des Entlüftungsventils die Möglichkeit, den Restdruck entsprechend den jeweiligen Verhältnissen zu verändern, insbesondere bei zunehmendem Verschleiss der Lamellen der Kupplung.

Vorteilhafte Ausgestaltungen und Weiterbildungen sind in weiteren Patentansprüchen aufgeführt. Die Erfingung ist nachfolgend anhand eines Ausführungsbeispiels unter Bezugnahme auf die beigefügte Zeichnung erläutert.

Figur 1 ist eine Ansicht einer Schaltungsanordnung der erfindungsgemässen Vorrichtung zur Kupplungssteuerung;

Figur 2 ist eine vergrösserte Schnittansicht des Kupplungssteuerventils nach Fig. 1; und

Figur 3 ist eine vergrösserte Teilschnittansicht einer durch einen Ringkolben erfindungsgemäss beaufschlagbaren Kupplung in der Verbindung zwischen einem motorischen Antrieb und einem Kompressor.

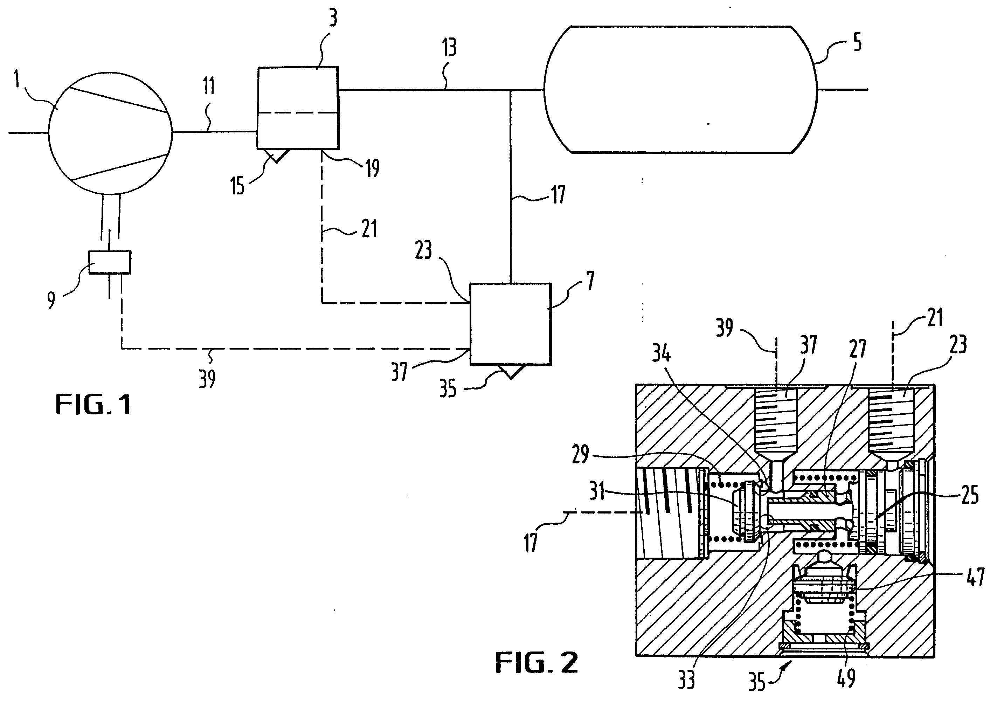

In dem in Fig. 1 dargestellten Schaltschema sind ein Kompressor 1, ein Druckregler 3, ein vom Druckregler gespeister Druckluftvorrat 5, ein erfindungsgemäss verwendetes Kupplungssteuerventil 7 und eine durch das Kupplungssteuerventil 7 in nachfolgend beschriebener Weise beaufschlagbare Kupplung 9 vorgesehen. Der Kompressor 1 wird (in nicht dargestellter Weise) motorisch angetrieben, wobei die Kupplung 9 in eingerücktem Zustand die Antreibskraft vom motorischen Antrieb auf den Kompressor 1 überträgt. Die Kupplung 9 kann in an sich bekannter Weise pneumatisch ausgerückt werden, wenn ein durch den Druckregler 3 vorherbestimmbarer Druck erreicht ist und der Druckregler in seine Leerlaufstellung umschaltet. Der vom Kompressor 1 über die Leitung 11 beschickte Druckregler 3 ist von bekannter Konstruktion; unterhalb eines vorherbestimmbaren Abschaltdruckes speist er über die Leitung 13 den Druckluftvorrat 5. Ist der vorgenannte Abschaltdruck erreicht, dann kann die vom Kompressor 1 geförderte Druckluft über den Entlüftungsanschluss 15 ins Freie geblasen werden. Mit Hilfe des mittels einer Leitung 17 an den Druckluftvorrat 5 angeschlossenen Kupplungssteuerventils 7 wird jedoch verhindert, dass der Kompressor 1 in der Leerlaufstellung des Druckreglers weiter arbeitet und unnötig Druckluft ins Freie geblasen wird.

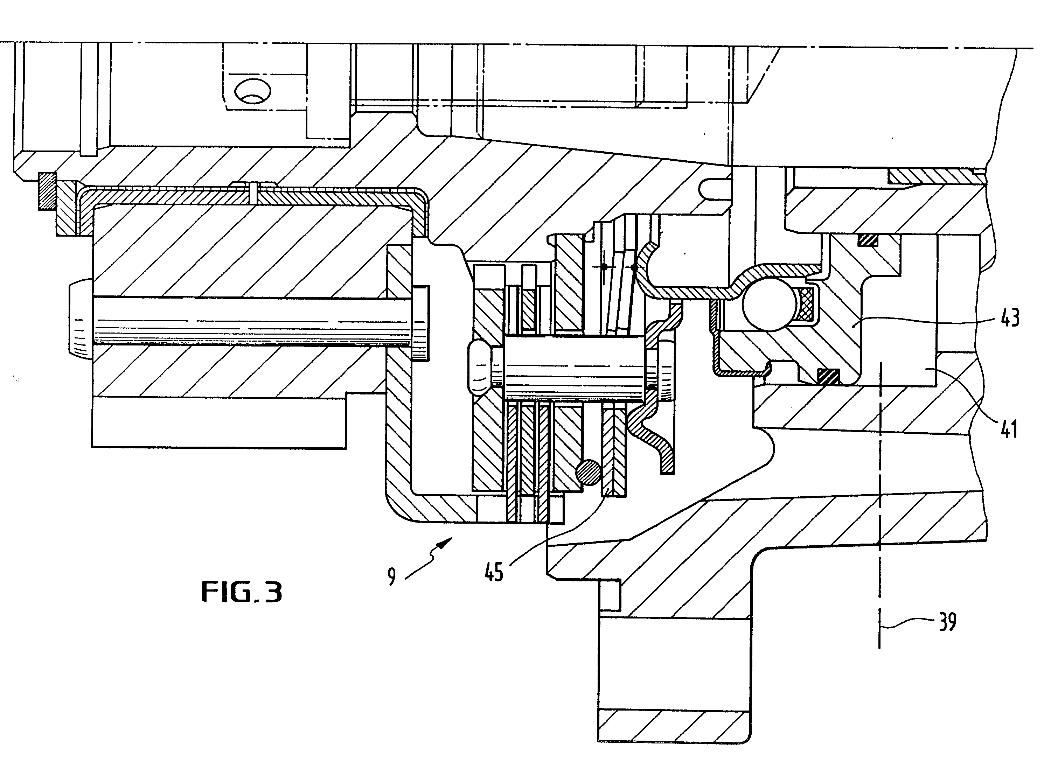

Der Druckregler 3 besitzt in an sich bekannter Weise einen Steuerausgang 19, welcher über eine Leitung 21 mit dem Steueranschluss 23 (Fig. 2) des Kupplungssteuerventils 7 verbunden ist. Am Steuerausgang 19 des Druckreglers steht in bekannter Weise Druckluft zur Verfügung, wenn der Druckregler in die Leerlaufstellung schaltet, so dass der Druck über die Leitung 21 und den Steueranschluss 23 an dem mit Fig. 2 dargestellten Kolben 25 zur Wirkung gelangt. Der Kolben 25 trägt einen hohlen Stössel 27, welcher gegenüber einem durch eine Feder 29 verspannten kegelförmigen Ventilkörper 31 einen Auslass 33 bildet, welcher in (in Fig. 2 dargestellt) geöffneter Lage über das hohle Innere des Stössels 27 mit einem Entlüftungsventil 35 in Verbindung steht. Vom Entlüftungsventil 35 besteht bei geöffnetem Auslass 33 folglich eine Verbindung zu einem Anschluss 37, welcher mittels der Leitung 39 mit dem Ringraum 41 (Fig. 3) in Verbindung steht. Der Ringraum 41 begrenzt einen abgedichtet geführten Ringkolben 43, welcher über ein Druckstück auf Tellerfedern 45 und über diese auf die Lamellen der in Fig. 3 dargestellten Lamellenkupplung einzuwirken vermag. Wird der Ringkolben 43 bei einer nachfolgend beschriebenen Druckbeaufschlagung gemäss Fig. 3 nach links gerichtet verschoben, dann wirkt er unter Zusammendrücken der Tellerfedern 45 so auf die Lamellen der Lamellenkupplung ein, dass der Kupplungseingriff gelöst wird. Hierdurch wird der Antreib zwischen dem (nicht dargestellten) Antriebsmotor und dem (in Fig. 3 gleichfalls nicht dargestellten) Kompressor unterbrochen, d. h. während der Leerlaufphase des Druckreglers wird gleichzeitig der Antrieb des Kompressors ausgeschaltet.

Die vorstehend erläuterte Anlage arbeitet wie folgt:

Bei laufendem Kompressor wird die an Druckluftvorrat 5 angeschlossene Anlage, so zum Beispiel die Bremsanlage eines Fahrzeuges, mit Druckluft gefüllt. Beim Erreichen des sog. Abschaltdruckes des Druckreglers 3 schaltet dieser in seine Leerlaufstellung um; in dieser Stellung besteht am Steuerausgang 19 ein Druck, welcher über die Leitung 21 und den Steueranschluss 23 am Kolben 25 zur Wirkung kommt und diesen gemäss Fig. 2 nach links gerichtet verschiebt. Hierbei hebt der Stössel 27 unter Schliessen des Auslasses 33 den Ventilkörper 31 von seinem gehäuseseitigen Sitz ab. Die über die Leitung 17 anstehende Vorwärtsdruckluft gelangt bei geschlossenem Auslass 33 über den geöffneten Einlass 34 und den Anschluss 37 in die Leitung 39 und von dieser in den Ringraum 41. Der Ringkolben 43 wird hierbei in vorstehend genannter Weise verschoben, um die Lamellenkupplung auszurücken.

Beim Erreichen des Einschaltdruckes schaltet der Druckregler wieder auf »Fördern«. Der Steuerausgang 19 und damit der Steueranschluss 23 werden entlüftet. Dabei wird der Kolben 25 durch die an ihm einwirkende Rückstellfeder nach rechts verschoben, und es wird der Durchgang vom Druckluftvorrat 5 zum Anschluss 37 und damit zum Ringraum 41 verschlossen, da sich der Ventilkörper 31 unter Verspannung der Feder 29 auf seinen gehäuseseitigen Sitz anlegt. Gleichzeitig wird der Auslass 33 infolge des Abhebens des Stössels 27 geöffnet, so dass der Ringraum 41 über den Anschluss 37, die Hohlbohrung im Stössel 27 und das Entlüftungsventil 35 entlüftet wird. Die Druckluft aus dem Ringraum 41 strömt also über das Entlüftungsventil 35 ins Freie, wenn der an seinem Aussenumfang ohne Abdichtung geführte Ventilkörper 47 gegen die Verspannung der Feder 49 von seinem gehäuseseitigen Sitz abhebt. Der Ventilkörper 47 schliesst entsprechend der Federkraft bei einem vorbestimmten Restdruck, so zum Beispiel bei einem Restdruck von 0,5 bar. Der verbleibende Restdruck drückt den Ringkolben 43 der Kupplung gegen die Tellerfedern, also mittelbar gegen die Lamellen der Kupplung. Hierdurch wird ein Verklemmen des zum Ausrücken der Kupplung dienenden Ringkolbens 43 verhindert. Gleichzeitig sind die baulichen Abessungen des Ringraumes 41 auf ein Mindestmass reduzierbar, da keine mechanischen Rückstellfedern innerhalb des Ringraumes benötigt werden.

Die Erfindung ist nicht auf die dargestellte Ausführungsform der verwendeten Kupplung als auch nicht auf die beispielhaft wiedergegebene Ausführungsform des Kupplungssteuerventils 7 beschränkt. Die gegenüber dem Ventilkörper 47 wirkende Feder 49 stützt sich in dargestellter Weise an einem Teller o. dgl. ab. Der Teller kann einschraubbar im Gehäuse des Kupplungssteuerventils 7 angeordnet sein, so dass die Federkraft der Feder 49 und somit der erzielbare Restdruck innerhalb eines bestimmten Bereiches einstellbar sind.

Gemäss einer vorteilhaften Konstruktion kann der Ventilmechanismus des Kupplungssteuerventils baulich im Druckregler 3 integriert sein; auch ist es im Rahmen des der Erfindung eigenen Gedankens möglich, einen anderen, in beliebig anderer Weise ableitbaren Steuerdruck auf den Kolben 25 einwirken zu lassen.

**Bezugszeichenliste**

| | |
|---|---|
| 1 | Kompressor |
| 3 | Druckregler |
| 5 | Druckluftvorrat |
| 7 | Kupplungssteuerventil |
| 9 | Kupplung |
| 11 | Leitung |
| 13 | Leitung |
| 15 | Entlüftungsanschluss |
| 17 | Leitung |
| 19 | Steuerausgang |
| 21 | Leitung |
| 23 | Steueranschluss |
| 25 | Kolben |
| 27 | Stössel |
| 29 | Feder |
| 31 | Ventilkörper |
| 33 | Auslass |
| 34 | Einlass |
| 35 | Entlüftungsventil |
| 37 | Anschluss |
| 39 | Leitung |
| 41 | Ringraum |
| 43 | Ringkolben |
| 45 | Tellerfeder |
| 47 | Ventilkörper |
| 49 | Feder |

**Patentansprüche**

1. Vorrichtung zum Ausrücken einer einen motorischen Antrieb mit einem Druckluftkompressor (1) verbindenden Kupplung (9), mit einem in einem Ringraum (41) geführten, durch Druckluft beaufschlagbaren Ringkolben (43), welcher bei Druckbeaufschlagung mittelbar oder unmittelbar gegenüber von zum Einrücken der Kupplung dienenden Federelementen (45) wirkt, und mit einem Kupplungssteuerventil (7), welches an den Ringraum angeschlossen ist und dessen Be- und Entlüftung steuert, dadurch gekennzeichnet, dass das Kupplungssteuerventil (7) an einen Druckluftvorrat (5) angeschlossen ist und einen Ventilmechanismus zum gesteuerten Einspeisen von Druckluft in den Ringraum (41) und zum Entlüften desselben bis auf einen Restdruck aufweist, wobei ein einen Steuerdruck führender Ausgang (19) eines an den Druckluftkompressor (1) angeschlossenen Druckreglers (3) mit einem Steueranschluss (23) des Kupplungssteuerventils (7) verbunden ist und der Ventilmechanismus des Kupplungssteuerventils einen durch den am Steueranschluss (23) anstehenden Steuerdruck des Druckreglers beaufschlagbaren Kolben (25) aufweist, welcher in Abhängigkeit vom Steuerdruck die Verbindung des Ringraumes (41) mit dem an das Kupplungssteuerventil angeschlossenen Druckluftvorrat oder mit einem Entlüftungsventil (35) steuert.

2. Vorrichtung nach Anspruch 1, dadurch gekennzeichnet, dass das Entlüftungsventil als ein im Kupplungssteuerventil (7) angeordnetes, federverspanntes Rückschlagventil ausgebildet ist.

3. Vorrichtung nach Anspruch 2, dadurch gekennzeichnet, dass das Rückschlagventil zur Veränderung des Restdruckes in seiner Federverspannung einstellbar ausgebildet ist.

4. Vorrichtung nach einem der vorangehenden Ansprüche, dadurch gekennzeichnet, dass das Kupplungssteuerventil baulich im Druckregler integriert ist.

## Claims

1. Device for disengaging a clutch (9) connecting a motorised drive to a compressed air compressor (1), having an annular piston (43) guided in an annular chamber (41) and acted on by compressed air, this piston, on being actuated by pressure, acting indirectly or directly in opposition to spring elements (45) used to disengage the clutch, and having a clutch control valve (7) which is connected to the annular chamber and controls its aeration and ventilation, characterised in that the clutch control valve (7) is conected to a compressed air supply (5) and has a valve mechanism for the controlled feeding of compressed air into the annular chamber (41) and for ventilation the same down to a residual pressure, wherein an outlet (19) of a pressure regulator (3) connected to the compressed air compressor (1) and conducting a control pressure is connected to a control connection (23) of the clutch control valve (7), and the valve mechanism of the clutch control valve has a piston (25) which can be acted on by the control pressure of the pressure regulator present at the control connection (23), this piston controlling, in dependence on the control pressure, the connection of the annular chamber (41) to the compressed air supply connected to the clutch control valve or to a ventilation valve (35).

2. Device according to claim 1, characterised in that the ventilation valve is constructed as a spring-loadet non-return valve arranged in the clutch control valve (7).

3. Device according to claim 2, characterised in that the non-return valve is constructed to be adjustable in its spring-loading so as to vary the residual pressure.

4. Device according to one of the preceding claims, characterised in that the clutch control valve is structurally integrated in the pressure regulator.

## Revendications

1. Dispositif pour débrayer un accouplement (9) reliant un entraînement actionné par moteur avec un compresseur à air comprimé (1), avec un piston annulaire (43) guidé dans une chambre annulaire (41), chargé par de l'air comprimé et qui agit directement contre des éléments-ressorts (45) qui servent à l'embrayage de l'accouplement, et avec une soupape de contrôle de l'accouplement (7), qui est reliée à la chambre annulaire et qui contrôle l'aération et la désaération de celle-ci, caractérisé par le fait que la soupape de contrôle de l'accouplement (7) est reliée à une réserve d'air comprimé (5) et comporte un mécenisme à soupapes pour contrôler l'alimentation en air comprimé de la chambre annulaire (41) et pour la désaération de celle-ci jusqu'à une pression résiduelle, une sortie (19) d'un régulateur de pression (3) relié au compresseur à air comprimé (1), et au niveau de laquelle est présente une pression de contrôle, étant reliée à un raccord de contrôle (23) de la soupape de contrôle de l'accouplement (7), alors que le mécanisme à soupapes de la soupape de contrôle de l'accouplement comporte un piston (25) qui est susceptible d'être chargé par la pression de contrôle du régulateur de pression, qui est présente au niveau du raccord de contrôle (23), ledit piston (25) contrôlant, en fonction de la pression de contrôle, la liaison de la chambre annulaire (41) avec la réserve d'air comprimé qui est reliée à la soupape de contrôle de l'accouplement, ou à une soupape de désaération (35).

2. Dispositif selon la revendication 1, caractérisé par le fait que la soupape de désaération est réalisée sous la forme d'une soupape de retenue armée par des ressorts et disposée dans la soupape de contrôle de l'accouplement (7).

3. Dispositif selon la revendication 2, caractérisé par le fait que la soupape de retenue est réalisée, pour modifier la pression résiduelle, de manière que son armement par ressorts soit réglable.

4. Dispositif selon l'une des revendications précédentes, caractérisé par le fait que la soupape de contrôle de l'accouplement est, du point de vue de la construction, intégrée dans le régulateur de pression.

FIG. 1

FIG. 2

0191150

FIG.3